# FASCICULE DE BREVET EUROPEEN

(11) **EP 0 743 729 B1**
(45) Date de publication et mention de la délivrance du brevet: **21.11.2001**
(21) Numéro de dépôt: 96410042.4
(22) Date de dépôt: 02.05.1996
(51) Int. Cl.: H02B 1/32, H02B 1/42

(54) **Dispositif de fixation d'un support pour coffret d'appareillage électrique**
Befestigungsvorrichtung für einen Träger eines elektrischen Gerätekastens
Device for mounting a support in a cabinet for electrical apparatus

(30) Priorité: 17.05.1995 FR 9506071
(43) Date de publication de la demande: 20.11.1996
(73) Titulaire: Schneider Electric Industries SA, 92500 Rueil-Malmaison (FR)
(72) Inventeur: Balaud, Philippe, 38050 Grenoble Cedex 09 (FR); Bourbon, Manuel, 38050 Grenoble Cedex 09 (FR); Dalla Costa, Thierry, 38050 Grenoble Cedex 09 (FR); Martinotti, Patrice, 38050 Grenoble Cedex 09 (FR)
(74) Mandataire: Jouvray, Marie-Andrée

(56) Documents cités:
- EP-A- 0 465 387
- EP-A- 0 651 483
- FR-A- 2 417 867

## Description

L'invention concerne un dispositif de maintien d'un support pour coffret d'appareillage électrique comportant des moyens de fixation pour maintenir le support dans le coffret et des moyens de réglage de la profondeur du support, la profondeur étant la distance entre une partie du support dirigée vers la face avant du coffret et un fond du coffret.

Les supports pour coffret d'appareillage électrique connus ont de préférence la forme d'un rail symétrique. Les rails symétriques sont particulièrement bien adaptés pour l'installation d'appareils électriques modulaires.

La hauteur des appareils modulaires n'est pas uniforme et il est courant de compenser ces différences de hauteur par un écart différent entre le rail et le fond du coffret. Cet écart est obtenu; soit en utilisant des entretoises de longueurs différentes, soit en raccourcissant l'entretoise par sciage ou découpage. Dans le premier cas, le coffret est livré avec plusieurs entretoises de longueurs différentes dont seule une partie sera utilisée. Dans le deuxième cas, il est difficile d'obtenir une longueur précise d'entretoise, le sciage n'étant jamais parfait et laissant subsister des bavures gênantes.

Un dispositif de réglage comportant des entretoises est décrit dans la demande de brevet EP 0465387.

Dans d'autres dispositifs de réglages connus, la hauteur des supports est réglée par des équerres de fixation comportant plusieurs pattes repliées à différentes distances de la face avant des coffrets. Un tel dispositif est décrit dans la demande de brevet FR 2417867.

Un autre dispositif de réglage, décrit dans la demande de brevet EP 0651483, comporte des moyens de verrouillage comprenant un crochet destiné à être enfiché dans des logements d'un pilier.

Les dispositifs de réglage connus ne permettent pas une modification rapide du réglage de la hauteur et nécessitent des éléments supplémentaires de types entretoise, equerre ou crochet.

L'invention a pour but de permettre un réglage simple et rapide de la hauteur des supports d'appareillage électrique.

Selon l'invention, les moyens de réglage comportent :
- des moyens de réglage amovibles associés au support et comportant vers une première et vers une seconde extrémité dudit support, perpendiculairement à la longueur et à la face avant du support, une première partie ayant une première dimension par rapport à la face avant du support, et une seconde partie ayant une seconde dimension plus courte que la première par rapport à la face avant du support, les formes des premières et des secondes parties du support n'étant pas symétriques par rapport à un axe perpendiculaire à la longueur et à la face avant du support pour permettre une première position du support dans laquelle ledit support est à une première distance par rapport au fond du coffret et une seconde position du support dans laquelle ledit support est à une seconde distance par rapport au fond du coffret, les positions étant changées en insérant le support dans le coffret dans des directions diamétralement opposées, et
- des moyens de réglage fixes solidaires du coffret, comportant des premiers et des seconds moyens de maintien des première et seconde extrémités du support, chaque moyen de maintien desdites extrémités du support comportant au moins une butée pour coopérer avec les premières et secondes parties de chaque extrémité du support.

Selon un mode particulier de réalisation de l'invention les moyens de fixation pour maintenir le support dans le coffret comportent un premier et un second orifices situés dans la partie centrale du support, et un rehausseur solidaire du fond du coffret et destiné à coïncider avec le premier ou le second orifice selon l'orientation du support par rapport au coffret.

L'arrière du support, opposée à la face avant dudit support, comporte une forme en palier, le premier orifice étant situé sur un premier palier à une première distance par rapport à la face avant du support, et le second orifice étant situé sur un second palier à une seconde distance par rapport à la face avant support.

Le dispositif de maintien comporte une unique vis de fixation traversant le premier ou le second orifice du support et se vissant dans le rehausseur.

Dans un mode préférentiel de réalisation, les premières parties des extrémités du support sont en butée avec les butées des moyens de réglage fixes dans une première position du support, et ne sont pas en butée avec lesdites butées desdits moyens de réglage fixes dans une seconde position du support, la seconde position du support par rapport au fond du coffret étant diamétralement opposée à la première,

Dans une première position du support dans le coffret les premiers moyens de maintien coopèrent avec la première extrémité du support et les seconds moyens de maintien coopèrent avec la seconde extrémité du support, et dans une seconde position du support les premiers moyens de maintien coopèrent avec la seconde extrémité et les seconds moyens de maintien coopèrent avec la première extrémité du support.

De préférence, les premiers et seconds moyens de maintien des extrémités du support comportent des glissières disposées perpendiculairement au fond pour immobiliser le support en rotation et en translation dans un plan parallèle au fond du coffret.

Selon un premier développement de l'invention, les secondes parties des extrémités du support sont en butée avec les butées des moyens de réglage fixes dans la seconde position du support par rapport au fond.

Selon un second développement de l'invention, la seconde dimension de la seconde partie de chaque extrémité est nulle, ladite seconde partie ayant la forme d'une rainure traversante entre la face avant et la face arrière du support .

De préférence, le support est un rail à profil symétrique en matière plastique moulée.

D'autres avantages ressortiront plus clairement de la description qui va suivre, de modes particuliers de réalisation de l'invention, donnés à titre d'exemples non limitatifs, et représentés aux dessins annexés sur lesquels :
La figure 1 représente un mode de réalisation d'une partie fixe d'un dispositif selon l'invention.
La figure 2 représente un support comportant à chaque extrémité des moyens de réglage amovibles d'un dispositif selon un mode de réalisation de l'invention.
La figure 3 représente un support selon la figure 2 associé à un fond de coffret comportant une partie fixe selon la figure 1.
La figure 4 représente un support selon la figure 3 maintenu dans une position haute par un dispositif selon l'invention.
La figure 5 représente le même support que celui de la figure 4 maintenu dans une position basse.
La figure 6 représente un autre mode de réalisation d'un support comportant des moyens de réglage amovibles selon l'invention.

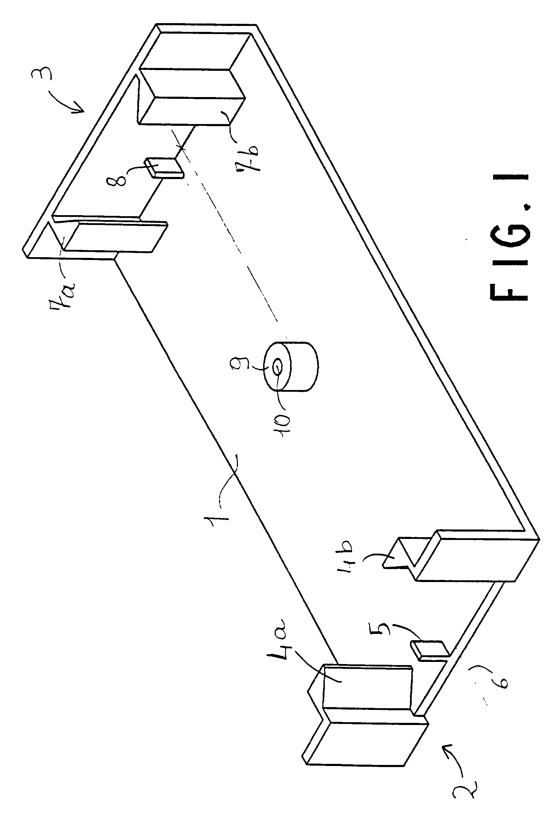

Un mode de réalisation de la partie fixe d'un dispositif selon l'invention est représenté sur la figure 1. Un premier dispositif 2 de maintien d'une première extrémité d'un support d'appareillage électrique et un second dispositif 3 de maintien d'une seconde extrémité dudit support sont solidaires d'un fond de coffret 1.

Le premier dispositif 2 de maintien comporte des glissières 4a et 4b montant perpendiculairement au fond 1. Une première butée 5 est disposée sur le fond entre les deux glissières 4a et 4b et décalée par rapport à un axe médian 6 perpendiculaire à l'alignement des deux glissières 4a et 4b. La butée 5 est plus proche de la glissière 4a que de la glissière 4b.

Le second dispositif 3 de maintien comporte des glissières 7a et 7b montant perpendiculairement au fond 1 et une seconde butée 8 disposée entre les deux glissières 7a et 7b. La butée 8 est plus proche de la glissière 7a que de la glissière 7b.

Les premier et second dispositif de maintien sont alignés sur le fond du boîtier selon l'axe 6 perpendiculaire à l'alignement des glissières 4a et 4b du premier dispositif et perpendiculairement aux glissières 7a et 7b du second dispositif. La glissière 4a est alignée avec la glissière 7a selon un premier axe parallèle à l'axe 6, la glissière 4b est alignée avec la glissière 7b selon un second axe parallèle à l'axe 6, et la butée 5 est alignée avec la butée 8 selon un troisième axe parallèle à l'axe 6.

Un rehausseur 9 est disposé entre le premier et le second dispositif de maintien dans l'alignement de l'axe 6. La distance entre le rehausseur et le premier dispositif de maintien 2 est différente de la distance entre le rehausseur et le second dispositif de maintien 3. Le rehausseur a dans son centre un orifice 10 destiné à recevoir une vis de fixation.

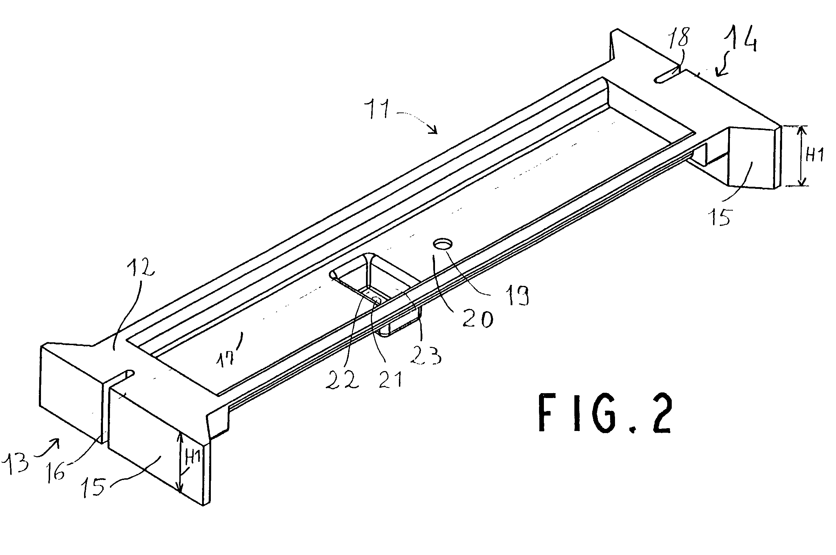

Un support 11 destiné à être maintenu dans les dispositifs de la figure 1 est représenté sur la figure 2. Le support 11 comporte une face avant 12 correspondant à la partie du support la plus proche de la face avant du coffret et recevant des appareils électriques modulaires. Dans ce mode de réalisation, le support est un rail symétrique comportant une première extrémité 13 et une seconde extrémité 14.

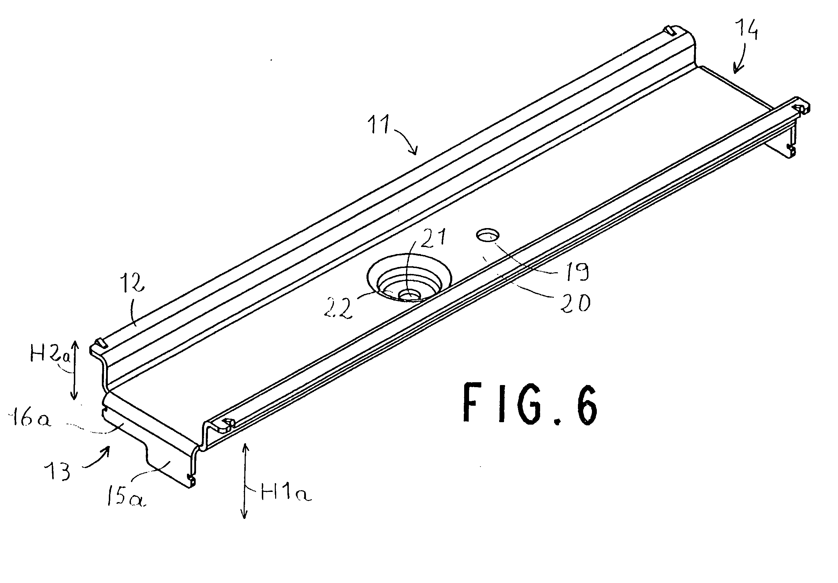

A l'extrémité 13 le support comporte une première partie 15 ayant une première dimension H1 par rapport à la face avant 12 du support et une seconde partie 16 ayant une seconde dimension H2 par rapport à la face avant 12 (voir figure 6). Dans le support de la figure 2 la seconde partie 16 est une rainure traversant totalement l'extrémité 13, la seconde dimension H2 est alors nulle. La rainure de la seconde partie 16 est décalée par rapport à un axe 17 longitudinal du support.

A l'extrémité 14, le support a la même structure qu'à l'extrémité 13. Une seconde partie 18 de la seconde extrémité 14 est une rainure alignée avec la rainure de la seconde partie 16 de la première extrémité. L'alignement des deux rainures est décalée et parallèle à l'axe 17.

Dans la partie centrale du support 11, un premier orifice 19 et un second orifice 21 sont situés respectivement sur un premier palier 20 et un second palier 22 à une première et à une seconde distance de la face avant 12.

Le second palier 22 étant dans un enfoncement 23, la seconde distance est plus grande que la première.

La distance entre la première extrémité 13 et le premier orifice est sensiblement égale à la distance entre la seconde extrémité 14 et le second orifice 21. L'orifice 19 est plus proche de l'extrémité 14 que de l'extrémité 13 alors que l'orifice 21 est plus proche de l'extrémité 13 que de l'extrémité 14.

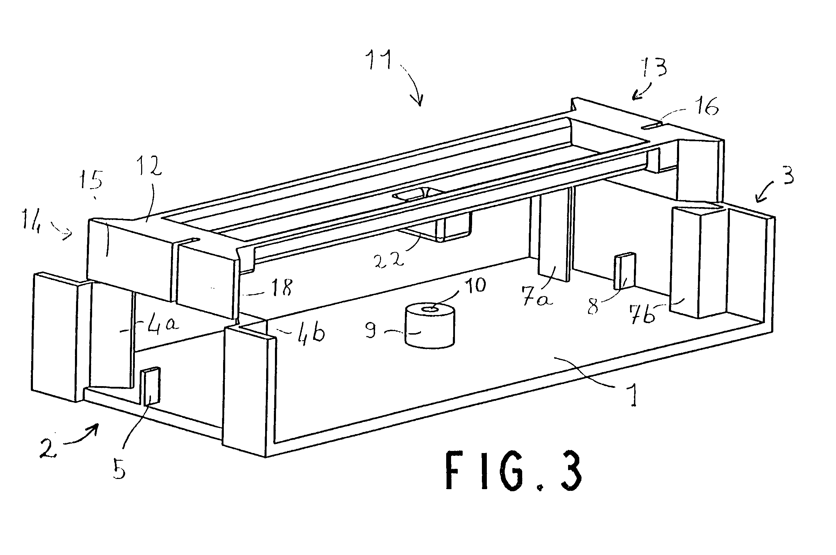

La figure 3 montre la mise en place du support 11 dans le coffret. la première extrémité 13 du support est introduite dans le second dispositif 3 de maintien entre les glissières 7a et 7b. La seconde extrémité 14 du support est introduite dans le premier dispositif 2 de maintien entre les glissières 4a et 4b.

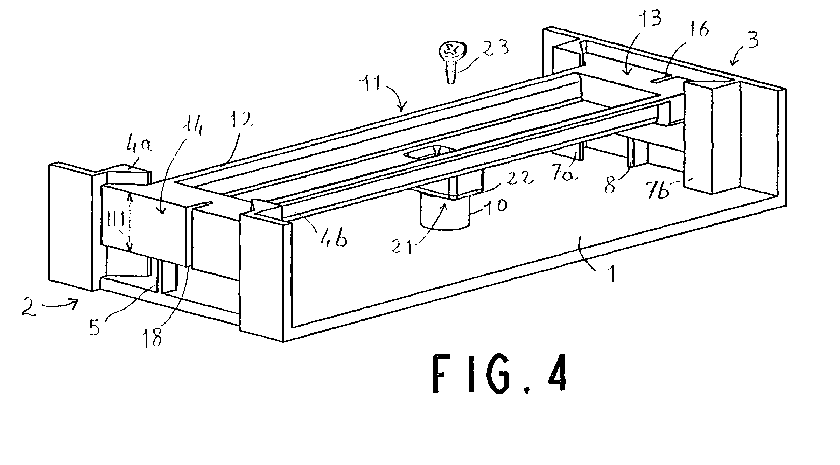

Dans cette position les rainures 18 et 16 ne coïncident pas avec les butées respectivement 5 et 8. Comme le montre la figure 4, les butées sont en contact avec les premières parties 15 des extrémités ayant une première dimension H1. La distance de la face avant 12 du support 11 par rapport au fond 1 est égale à la somme de la dimension de la butée et de la première dimension H1 des premières parties 15 des extrémités 13 et 14. Le support est fixé et immobilisé par une vis 23 qui traverse le second orifice 21 du second palier 22 et se visse dans l'orifice 10 du réhausseur 9.

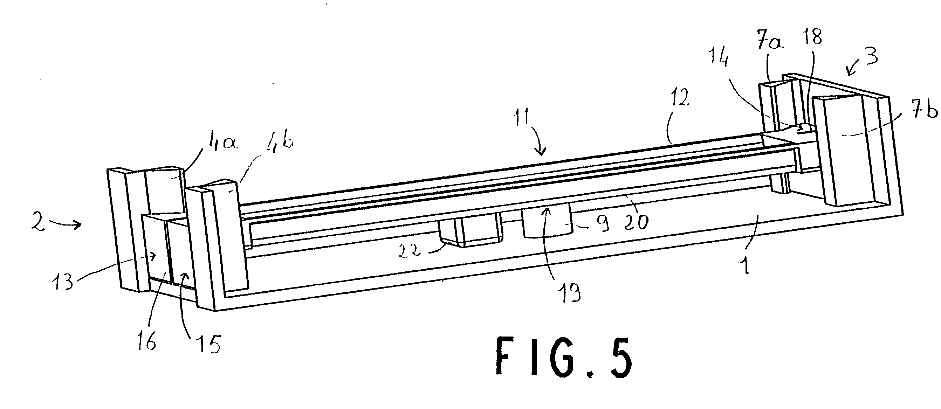

La figure 5 montre la mise en place du support 11 dans le coffret dans une orientation diamétralement opposée à celle de la figure 4. Le premier dispositif 2 de maintien reçoit la première extrémité 13 du support 11 et le second dispositif 3 de maintien reçoit la seconde extrémité 14. Dans cette position, la première butée 5 coïncide avec la rainure 16 correspondante de la seconde partie de la première extrémité 13, et la seconde butée 8 coïncide avec la rainure 18 correspondante de la seconde partie de la seconde extrémité 14. Les butées pénètrent dans les rainures et les extrémités 13 et 14 peuvent atteindre le fond 1 du coffret. le support est fixé dans le fond du coffret par une vis 23 qui traverse le premier orifice 19 situé sur le premier palier 20 et se visse dans l'orifice 10 du rehausseur 9. La distance entre la face avant 12 du support est alors égale à la dimension H1 de la première partie 15 des extrémités.

Dans la position de la figure 5, la face avant du support est plus proche du fond du coffret que dans la position de la figure 4. La différence de niveau entre les deux positions est déterminée, dans ce mode de réalisation, par les dimensions des butées 5 et 8.

Le passage d'une position à une autre est facile. Il suffit de sortir le support de son emplacement dans le boîtier, de le faire pivoter de 180°, ce qui permet d'inverser les extrémités par rapport aux dispositifs de maintien, et de l'introduire de nouveau dans son emplacement. Cette manoeuvre ne nécessite aucun élément supplémentaire de type entretoise. Le support est amovible par rapport aux dispositifs de maintien. Dans les modes de réalisation décrits ci-dessus le support et le coffret sont de préférence en matière plastique moulée.

La figure 6 montre un autre mode de réalisation d'un support 11 ayant la forme d'un rail symétrique en métal. La première extrémité 13 comporte une première partie 15a ayant une première dimension H1a par rapport à la face avant 12 de support et une seconde partie 16a ayant une seconde dimension H2a par rapport à la face avant 12. La seconde extrémité 14 a la même structure que la première extrémité avec une première et une seconde partie.

La seconde partie 16a a une dimension H2a prédéterminée et une forme non traversante différente des rainures 16 et 18 du support de la figure 2.

Les premières et les secondes parties des extrémités coopèrent avec les butées solidaires du fond pour permettre deux positions différentes du support. Lorsque la partie 16a a une forme non traversante si les butées ont des dimensions supérieures à la différence entre H1a et H2a, et la différence de hauteur entre les deux positions du support peut être égale à la différence desdites dimensions H1a et H2a.

Dans les cas contraires les différences de hauteur entre les deux positions dépendent des dimensions des butées.

Les extrémités des supports décrites ci-dessus sont en métal découpé et plié comme sur la figure 6 ou en matière moulée ou usinée comme sur la figure 2. D'autres formes d'extrémités sont possibles pour mettre en oeuvre l'invention. par exemple les secondes parties des supports situées aux extrémités peuvent être des perçages ou des évidements. Les butées peuvent avoir toutes sortes de formes destinées à coopérer avec les premières et les secondes parties des extrémités du support, pour le réglage de la hauteur.

Dans les modes de réalisation décrits ci-dessus les premières et secondes parties des supports sont disposées aux extrémités du support mais elles peuvent aussi se situer sensiblement en retrait desdites extrémités.

## Revendications

1. Dispositif de maintien d'un support (11) pour coffret d'appareillage électrique comportant des moyens de fixation pour maintenir le support dans le coffret et des moyens de réglage de la profondeur du support, la profondeur étant la distance entre une partie (12) du support dirigée vers la face avant du coffret et un fond (1) du coffret,
dispositif **caractérisé en ce que** les moyens de réglage comportent
- des moyens de réglage amovibles associés au support (11) et comportant vers une première (13) et vers une seconde (14) extrémité dudit support (11), perpendiculairement à la longueur et à la face avant du support, une première partie (15,15a) ayant une première dimension (H1, H1a) par rapport à la face avant (12) du support, et une seconde partie (16, 18, 16a) ayant une seconde dimension (H2, H2a) plus courte que la première (H1, H1a) par rapport à la face avant du support, les formes des premières et des secondes parties du support n'étant pas symétriques par rapport à un axe perpendiculaire à la longueur et à la face avant du support pour permettre une première position du support dans laquelle ledit support est à une première distance par rapport au fond du coffret et une seconde position du support dans laquelle ledit support est à une seconde distance par rapport au fond du coffret, les positions étant changées en insérant le support dans le coffret dans des directions diamétralement opposées, et
- des moyens de réglage fixes solidaires du coffret, comportant des premiers (2) et des seconds (3) moyens de maintien des première (13) et seconde (14) extrémités du support, chaque moyen de maintien desdites extrémités du support comportant au moins une butée (5, 8) pour coopérer avec les premières (15, 15a) et secondes (16,16a, 18) parties de chaque extrémité du support.

2. Dispositif de maintien selon la revendication 1 **caractérisé en ce que** les moyens de fixation pour maintenir le support (11) dans le coffret comportent un premier (19) et un second (21) orifices situés dans la partie centrale du support, et un rehausseur (9) solidaire du fond (1) du coffret et destiné à coïncider avec le premier (19) ou le second (21) orifice selon l'orientation du support (11) par rapport au coffret.

3. Dispositif de maintien selon la revendication 2 **caractérisé en ce que** l'arrière du support (11), opposée à la face avant dudit support, comporte une forme en palier, le premier orifice (19) étant situé sur un premier palier (20) à une première distance par rapport à la face avant (12) du support, et le second orifice (21) étant situé sur un second palier (22) à une seconde distance par rapport à la face avant (12) du support.

4. Dispositif de maintien selon l'une des revendications 2 et 3 **caractérisé en ce qu'**il comporte une unique vis (23) de fixation traversant le premier (19) ou le second (21) orifice du support (11) et se vissant dans le rehausseur (9).

5. Dispositif de maintien selon l'une quelconque des revendications 1 à 4 **caractérisé en ce que** les premières parties (15,15a) des extrémités (13, 14) du support sont en butée avec les butées (5, 8) des moyens de réglage fixes (2, 3) dans une première position du support, et ne sont pas en butée avec lesdites butées (5, 8) desdits moyens de réglage fixes dans une seconde position du support, la seconde position du support (11) par rapport au fond (1) du coffret étant diamétralement opposée à la première,

6. Dispositif de maintien selon l'une quelconque des revendications 1 à 5 **caractérisé en ce que** :
- dans une première position du support (11) dans le coffret les premiers moyens (2) de maintien coopèrent avec la première extrémité (13) du support et les seconds moyens (3) de maintien coopèrent avec la seconde extrémité (14) du support, et
- dans une seconde position du support les premiers moyens (2) de maintien coopèrent avec la seconde extrémité (14) et les seconds moyens (3) de maintien coopèrent avec la première extrémité (13) du support.

7. Dispositif de maintien selon l'une quelconque des revendications 1 à 6 **caractérisé en ce que** les premiers (2) et seconds (3) moyens de maintien des extrémités (13, 14) du support (11) comportent des glissières (4a, 4b, 7a, 7b) disposées perpendiculairement au fond (1) pour immobiliser le support (11) en rotation et en translation dans un plan parallèle au fond (1) du coffret.

8. Dispositif de maintien selon l'une quelconque des revendications 5 à 7 **caractérisé en ce que** les secondes parties (16,16a,18) des extrémités (13, 14) du support sont en butée avec les butées (5, 8) des moyens de réglage fixes (2, 3) dans la seconde position du support (11) par rapport au fond (1).

9. Dispositif de maintien selon l'une quelconque des revendications 1 à 8 **caractérisé en ce que** la seconde dimension (H2) de la seconde partie de chaque extrémité est nulle, ladite seconde partie ayant la forme (16, 18) d'une rainure traversante entre la face avant et la face arrière du support (11).

10. Dispositif de maintien selon l'une quelconque des revendications 1 à 9 **caractérisé en ce que** le support (11) est un rail à profil symétrique en matière plastique moulée.

## Patentansprüche

1. Haltevorrichtung (11) für einen Geräteträger eines Elektroinstallationskastens mit Befestigungsmitteln zur Montage des Geräteträgers im Installationskasten sowie Einstellmitteln zur Anpassung der Einbauhöhe des Geräteträgers, wobei die Einbauhöhe dem Abstand zwischen einem, der Vorderseite des Installationskastens zugewandten Bereich (12) des Geräteträgers und einem Boden (1) des Installationskastens entspricht,
**dadurch gekennzeichnet, daß** die Einstellmittel
- dem Geräteträger (11) zugeordnete bewegbare Einstellmittel, die im Bereich eines ersten (13) bzw. eines zweiten Endes (14) des genannten Geräteträgers (11) in senkrechter Anordnung zur Länge und zur Vorderseite des Geräteträgers einen ersten Bereich (15, 15a) mit einer ersten Abmessung (H1, H1a) bezüglich der Vorderseite (12) des Geräteträgers sowie einen zweiten Bereich (16, 18, 16a) mit einer zweiten, im Vergleich zur ersten Abmessung (H1, H1a) kürzeren Abmessung (H2, H2a) bezüglich der Vorderseite des Geräteträgers aufweisen, wobei der erste und der zweite Bereich bezüglich einer senkrecht zur Länge sowie zur Vorderseite des Geräteträgers verlaufenden Achse unsymmetrisch ausgebildet sind, um eine erste Einbaulage des Geräteträgers, in der dieser Geräteträger einen ersten Abstand zum Boden des Installationskasten aufweist, sowie eine zweite Einbaulage des Geräteträgers zu ermöglichen, in der der genannte Geräteträger einen zweiten Abstand zum Boden des Installationskastens aufweist, wobei ein Wechsel von der einen in die andere Einbaulage dadurch erfolgt, daß der Geräteträger in jeweils entgegengesetzter Richtung in den Installationskasten eingesetzt wird, sowie
- fest mit dem Installationskasten verbundene feststehende Einstellmittel mit ersten (2) und zweiten (3) Haltemitteln zur Aufnahme des ersten (13) bzw. des zweiten (14) Endes des Geräteträgers umfassen, wobei jedes Haltemittel zur Aufnahme der genannten Enden des Geräteträgers mindestens einen Anschlag (5, 8) umfaßt, der dazu dient, mit den ersten (15, 15a) bzw. den zweiten (16, 16a, 18) Bereichen jedes Endes des Geräteträgers zusammenzuwirken.

2. Haltevorrichtung nach Anspruch 1, **dadurch gekennzeichnet, daß** die Befestigungsmittel zur Montage des Geräteträgers (11) im Installationskasten eine erste (19) und eine zweite (21) im Mittelbereich des Geräteträgers ausgebildete Bohrung sowie einen fest mit dem Boden (1) des Installationskastens verbundenen Erhöhungsaufsatz (9) umfassen, der dazu dient, je nach Einbaulage des Geräteträgers (11) im Installationskasten eine mit der ersten (19) oder der zweiten (21) Bohrung fluchtende Lage einzunehmen.

3. Haltevorrichtung nach Anspruch 2, **dadurch gekennzeichnet, daß** auf der Rückseite des Geräteträgers (11), welche der Vorderseite des genannten Geräteträgers gegenüber liegt, ein gestufter Bereich ausgebildet ist, wobei auf einer ersten Stufe (20) mit einem ersten Abstand zur Vorderseite (12) des Geräteträgers die erste Bohrung (19) und auf einer zweiten Stufe (22) mit einem zweiten Abstand zur Vorderseite (12) des Geräteträgers die zweite Bohrung (21) eingebracht sind.

4. Haltevorrichtung nach einem der Ansprüche 2 und 3, **dadurch gekennzeichnet, daß** sie eine einzige Befestigungsschraube (23) umfaßt, die durch die erste (19) oder die zweite (21) Bohrung des Geräteträgers (11) geführt und in den Erhöhungsaufsatz (9) eingeschraubt wird.

5. Haltevorrichtung nach irgendeinem der Ansprüche 1 bis 4, **dadurch gekennzeichnet, daß** in einer ersten Einbaulage des Geräteträgers die ersten Bereiche (15, 15a) der Enden (13, 14) des Geräteträgers auf den Anschlägen (5, 8) der feststehenden Einstellmittel (2, 3) aufliegen und in einer zweiten Einbaulage des Geräteträgers nicht auf den genannten Anschlägen (5, 8) der feststehenden Einstellmittel aufliegen, wobei die zweite und die erste Einbaulage des Geräteträgers (11) über dem Boden (1) des Installationskastens um 180° zueinander versetzt sind.

6. Haltevorrichtung nach irgendeinem der Ansprüche 1 bis 5, **dadurch gekennzeichnet, daß**
- in einer ersten Einbaulage des Geräteträgers (11) im Installationskasten die ersten Haltemittel (2) mit dem ersten Ende (13) des Geräteträgers und die zweiten Haltemittel (3) mit dem zweiten Ende (14) des Geräteträgers zusammenwirken und
- in einer zweiten Einbaulage des Geräteträgers die ersten Haltemittel (2) mit dem zweiten Ende (14) und die zweiten Haltemittel (3) mit dem ersten Ende (13) des Geräteträgers zusammenwirken.

7. Haltevorrichtung nach irgendeinem der Ansprüche 1 bis 6, **dadurch gekennzeichnet, daß** die ersten (2) und zweiten (3) Haltemittel zur Aufnahme der Enden (13, 14) des Geräteträgers (11) senkrecht zum Boden (1) angeordnete Gleitführungen (4a, 4b, 7a, 7b) umfassen, die dazu dienen, den Geräteträger (11) in Rotations- und Translationsrichtung in einer parallel zum Boden (1) des Installationskastens verlaufenden Ebene zu blockieren

8. Haltevorrichtung nach irgendeinem der Ansprüche 5 bis 7, **dadurch gekennzeichnet, daß** in der zweiten Einbaulage des Geräteträgers (11) in bezug zum Boden (1) die zweiten Bereiche (16, 16a, 18) der Enden (13, 14) des Geräteträgers auf den Anschlägen (5, 8) der feststehenden Einstellmittel (2, 3) aufliegen.

9. Haltevorrichtung nach irgendeinem der Ansprüche 1 bis 8, **dadurch gekennzeichnet, daß** die zweite Abmessung (H2) des zweiten Bereichs jedes der Enden null ist, wobei der genannte zweite Bereich in Form einer den Geräteträger (11) von der Vorderseite bis zur Rückseite durchquerenden Nut (16, 18) ausgebildet ist.

10. Haltevorrichtung nach irgendeinem der Ansprüche 1 bis 9, **dadurch gekennzeichnet, daß** der Geräteträger (11) als symmetrische Profilschiene aus Preßkunststoff ausgebildet ist.

## Claims

1. A securing device of a support (11) for an electrical switchgear enclosure comprising fixing means to secure the support in the enclosure and means for adjusting the depth of the support, the depth being the distance between a part (12) of the support directed towards the front panel of the enclosure and a back plate (1) of the enclosure,
a device **characterized in that** the adjustment means comprise:
- removable adjustment means associated to the support (11) and comprising near a first end (13) and a second end (14) of said support (11), perpendicularly to the length and to the front face of the support, a first part (15, 15a) having a first dimension (H1, H1a) with respect to the front face (12) of the support, and a second part (16, 18, 16a) having a second dimension (H2, H2a) shorter than the first dimension (H1, H1a) with respect to the front face of the support, the forms of the first and second parts of the support not being symmetrical with respect to an axis perpendicular to the length and to the front face of the support to enable a first position of the support wherein said support is at a first distance with respect to the back plate of the enclosure and a second position of the support wherein said support is at a second distance with respect to the back plate of the enclosure, the positions being changed by inserting the support in the enclosure in diametrically opposite directions, and
- fixed adjustment means securedly attached to the enclosure, comprising first means (2) and second means (3) for securing the first end (13) and the second end (14) of the support, each means for securing said ends of the support comprising at least one stop (5, 8) to co-operate with the first part (15, 15a) and the second part (16, 16a, 18) of each end of the support.

2. The securing device according to claim 1 **characterized in that** the fixing means to secure the support (11) in the enclosure comprise a first orifice (19) and a second orifice (21) situated in the central part of the support, and a spacer (9) securedly attached to the back plate (1) of the enclosure and designed to coincide with the first orifice (19) or the second orifice (21) according to the orientation of the support (11) with respect to the enclosure.

3. The securing device according to claim 2 **characterized in that** the rear of the support (11), opposite the front face of said support, presents a level section form, the first orifice (19) being situated on a first level section (20) at a first distance with respect to the front face (12) of the support, and the second orifice (21) being situated on a second level section (22) at a second distance with respect to the front face (12) of the support.

4. The securing device according to one of the claims 2 and 3 **characterized in that** it comprises a single fixing screw (23) passing through the first orifice (19) or the second orifice (21) of the support (11) and screwing into the spacer (9).

5. The securing device according to any one of the claims 1 to 4 **characterized in that** the first parts (15, 15a) of the ends (13, 14) of the support come up against the stops (5, 8) of the fixed adjustment means (2, 3) in a first position of the support, and do not come up against said stops (5, 8) of said fixed adjustment means in a second position of the support, the second position of the support (11) with respect to the back plate (1) of the enclosure being diametrically opposite to the first,

6. The securing device according to any one of the claims 1 to 5 **characterized in that**:
- in a first position of the support (11) in the enclosure the first securing means (2) co-operate with the first end (13) of the support and the second securing means (3) co-operate with the second end (14) of the support, and
- in a second position of the support the first securing means (2) co-operate with the second end (14) of the support and the second securing means (3) co-operate with the first end (13) of the support.

7. The securing device according to any one of the claims 1 to 6 **characterized in that** the first securing means (2) and second securing means (3) of the ends (13, 14) of the support (11) comprise slides (4a, 4b, 7a, 7b) arranged perpendicularly to the back plate (1) to immobilise the support (11) in rotation and in translation in a plane parallel to the back plate (1) of the enclosure.

8. The securing device according to any one of the claims 5 to 7 **characterized in that** the second parts (16, 16a, 18) of the ends (13, 14) of the support come up against the stops (5, 8) of the fixed adjustment means (2, 3) in the second position of the support (11) with respect to the back plate (1).

9. The securing device according to any one of the claims 1 to 8 **characterized in that** the second dimension (H2) of the second part of each end is zero, said second part having the form (16, 18) of a through-hole groove between the front face and the rear face of the support (11).

10. The securing device according to any one of the claims 1 to 9 **characterized in that** the support (11) is a symmetrical profile rail made of moulded plastic material.
